(19) Europäisches Patentamt
European Patent Office
Office européen des brevets

(11) **EP 4 125 407 B1**

(12) **EUROPEAN PATENT SPECIFICATION**

(45) Date of publication and mention
of the grant of the patent:
**15.05.2024 Bulletin 2024/20**

(21) Application number: **21711000.6**

(22) Date of filing: **15.03.2021**

(51) International Patent Classification (IPC):
*A23G 9/34* $^{(2006.01)}$      *A23G 9/38* $^{(2006.01)}$
*A23G 9/40* $^{(2006.01)}$

(52) Cooperative Patent Classification (CPC):
**A23G 9/34; A23G 9/38; A23G 9/40**

(86) International application number:
**PCT/EP2021/056577**

(87) International publication number:
**WO 2021/190981 (30.09.2021 Gazette 2021/39)**

(54) **FROZEN CONFECTION**

GEFRORENES KONFEKT

CONFISERIE SURGELÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2020 EP 20164816**

(43) Date of publication of application:
**08.02.2023 Bulletin 2023/06**

(73) Proprietor: **Unilever IP Holdings B.V.
3013 AL Rotterdam (NL)**

(72) Inventors:
• **CHAMBERLAIN, Dorothy, Margaret
Northamptonshire NN9 5RR (GB)**
• **JOUSSE, Fabien, Frédéric, Raymond, Marie
Sharnbrook Bedford Bedfordshire MK44 1LQ
(GB)**
• **ROSSETTI, Damiano
Sharnbrook Bedford Bedfordshire MK44 1LQ
(GB)**
• **SAMMOUTI, Rafaella
Sheffield S8 8AG (GB)**

(74) Representative: **Askew, Sarah Elizabeth
Unilever Patent Group
Bronland 14
6708 WH Wageningen (NL)**

(56) References cited:
WO-A1-02/080693        WO-A1-2014/095307
WO-A1-2017/001265      WO-A1-2017/133863
CN-B- 102 870 951      US-A1- 2003 134 024

EP 4 125 407 B1

**Description**

**Field of the invention**

The present invention relates to frozen confections, in particular frozen confections that are formulated to be readily dispensed at low temperatures.

**Background of the invention**

Systems for dispensing frozen confections such as ice cream have been developed in recent years. For example, ice cream may be packaged in flexible pouches that can be squeezed by hand to extrude ice cream, or alternatively in piston-type cartridges or bag-in-bottle containers from which the ice cream can be dispensed by a dispensing device. Such systems typically employ frozen confection formulations that are specifically formulated to be dispensed at the desired low temperatures.

For example, US 2004/0161503 discloses a frozen product which comprises a cartridge containing a frozen aerated confection which is soft at -18°C and which is capable of being extruded from the cartridge at this temperature. The frozen aerated confection has an overrun of above 20% and below 100%, and contains less than 1.5% w/w glycerol, freezing point depressants in an amount of between 25% and 37% w/w, and between 2% and 12% fat, wherein the freezing point depressants have a number average molecular weight $<M>_n$ of less than 300.

WO 2017/133863 discloses a frozen confection which is formulated to be dispensed from containers at low temperatures. The frozen confection comprises freezing point depressants in an amount of from 25 to 35% by weight of the frozen confection, wherein the number average molecular weight of the freezing point depressants is from 200 to 250 g mol$^{-1}$, and wherein the freezing point depressants comprise erythritol in an amount of from 0.25 to 7% by weight of the frozen confection.

CN102870951B discloses a preparation method for low fat high stability soybean ice cream.

The present inventors have recognised that there remains a need to develop improved formulations for use in systems for dispensing frozen confections like soft ice. In particular, the present inventors have found that there is a need for frozen confection formulations which are extrudable at the temperature of a domestic freezer, and which are also resilient to temperature variations inherent in a frozen supply chain.

**Summary of the invention**

The inventors have found that improved frozen confection formulations can be provided by using a specific amount and type of freezing point depressant in combination with a particular ratio of pulse protein to milk protein. Thus, the present invention is directed to a frozen confection comprising freezing point depressants in an amount of 20 wt% to 40 wt%, wherein the number average molecular weight $<M>_n$ of the freezing point depressants is 200 g mol$^{-1}$ to 275 g mol$^{-1}$; and protein in an amount of 0.5 wt% to 10 wt%, wherein the protein comprises pulse protein and milk protein and the weight ratio of pulse protein to milk protein is from 1:2 to 1:6.

**Detailed description of the invention**

The present invention relates to a frozen confection. As used herein the term frozen confection means a confection intended for consumption in the frozen state (i.e. where the temperature of the confection is less than 0°C, and preferably wherein the confection comprises significant amounts of ice). Examples of frozen confections include ice creams, frozen yoghurts, gelatos, and sherbets. In particular, the present invention relates to frozen confection formulations which are extrudable at low temperatures (e.g. the temperature of a domestic freezer, which is usually around -18°C).

The amount of ice in the frozen confection is, to a large extent, determined by the amount and molecular weight of the freezing point depressants in the formulation. If the amount of ice is too high, then the frozen confection becomes difficult to extrude at low temperatures found in some domestic freezers. This is especially problematic if the frozen confection is designed to be extruded from flexible pouches that are squeezed by hand. Thus, the frozen confection comprises freezing point depressants in an amount of at least 20 wt%, and preferably in amount of at least 23 wt%, at least 25 wt%, at least 27 wt% or even at least 28 wt%.

Freezing point depressants as defined in this invention consist of:

- monosaccharides and disaccharides;
- oligosaccharides formed from 3 to 10 monosaccharide monomers;
- corn syrups with a dextrose equivalent (DE) of 20 or more, preferably 40 or more, or 60 or more;

- sugar alcohols, preferably selected from: erythritol, arabitol, glycerol, xylitol, sorbitol, mannitol, lactitol maltitol, and mixtures thereof.

The average molecular weight for a mixture of freezing point depressants is defined by the number average molecular weight $<M>_n$ which can be calculated using the following equation:

$$< M >_n = \frac{\sum w_i}{\sum (w_i / M_i)} = \frac{\sum N_i M_i}{\sum N_i}$$

where $w_i$ is the mass of species i, $M_i$ is the molar mass of species i and $N_i$ is the number of moles of species i of molar mass $M_i$.

As mentioned above, the freezing point depressants may comprise certain corn syrups. Corn syrups are complex multi-component sugar mixtures and dextrose equivalent (DE) is a common means of classification. As set out in Chirife et al. (J. Food Eng. 1997 33: 221-226), the number average molecular weight $<M>_n$ of corn syrups can be calculated using the following equation:

$$< M >_n = \frac{18016}{DE}$$

In order to provide a frozen confection which is extrudable at low temperatures - even when squeezed by hand, the number average molecular weight $<M>_n$ of the freezing point depressants in the frozen confection no more than 275 g mol$^{-1}$. Preferably the number average molecular weight $<M>_n$ of the freezing point depressants in the frozen confection is no more than 260 g mol$^{-1}$, no more than 245 g mol$^{-1}$, or even no more than 230 g mol$^{-1}$.

The present inventors have also realised that if the amount of freezing point depressants becomes too high and/or their molecular weight becomes too low, then the rheology of the frozen confection will become too fluid at higher temperatures such as those that may be encountered in the frozen supply chain. Increased fluidity is considered problematic since it is associated with loss of microstructure. Thus, the frozen confection comprises freezing point depressants in an amount of no more than 40 wt%, and preferably in amount of up to 38 wt%, up to 36 wt%, up to 34 wt% or even up to 32 wt%.

In addition, the number average molecular weight $<M>_n$ of the freezing point depressants in the frozen confection of the present invention is at least 200 g mol$^{-1}$. Preferably the number average molecular weight $<M>_n$ of the freezing point depressants in the frozen confection is at least 202 g mol$^{-1}$, at least 204 g mol$^{-1}$, or even at least 206 g mol$^{-1}$.

The frozen confection of the present invention comprises protein in an amount of from 0.5 wt% to 10 wt%, preferably in an amount of from 0.8 wt% to 8 wt%, or 1 wt% to 6 wt%.

It is preferred that the freezing point depressants are predominantly saccharides (i.e. monosaccharides, disaccharides and oligosaccharides). This will include corn syrups, insofar as these are a mixture of monosaccharides, disaccharides and oligosaccharides. In particular, it is preferred that at least 90% by weight of the freezing point depressants are monosaccharides, disaccharides and oligosaccharides, for example at least 92% by weight, at least 95% by weight or even 97% to 100% by weight.

An especially preferred disaccharide is lactose as this provides freezing point depression without imparting a high amount of sweetness to the frozen confection. Preferably the freezing point depressants comprise lactose in an amount of at least 5% by weight of the freezing point depressants, more preferably from 10% to 25% by weight. The lactose may be provided by the source of milk protein (e.g. skimmed milk powder is typically 50 wt% lactose) and/or may be added separately.

In addition to saccharides, the freezing point depressants preferably comprise erythritol. Erythritol is particularly effective at imparting desirable rheological properties to the frozen confection. In addition, erythritol does not impart an unpleasant off-taste, is not overly sweet, and does not normally cause laxative effects and bloating, as are often experienced after consumption of other sugar alcohols. Preferably the frozen confection comprises erythritol in an amount of at least 0.25 wt%, at least 0.5 wt%, at least 0.7 wt%, or even at least 1 wt%. Preferably the frozen confection comprises erythritol in an amount of no more than 5 wt%, no more than 4 wt%, no more than 3.5 wt%, or even no more than 3 wt%.

The freezing point depressants preferable comprise saccharides (i.e. monosaccharides, disaccharides and oligosaccharides) and erythritol in a total amount of at least 98% by weight of the freezing point depressants, or even 99% to 100% by weight of the freezing point depressants.

Certain freezing point depressants are undesirable as they impart unwanted taste and/or cause undesirable physiological effects.

Preferably the frozen confection comprises less than 5 wt% fructose, less than 3 wt%, or even less than 2 wt%. Preferably the frozen confection is substantially free of fructose.

Preferably the frozen confection comprises less than 1.5 wt% glycerol, less than 1 wt% glycerol, less than 0.5 wt% glycerol, or even less than 0.2 wt% glycerol. Preferably the frozen confection is substantially free of glycerol. Additionally or alternatively, the total amount of arabitol, glycerol, xylitol, sorbitol, mannitol, lactitol, and maltitol is preferably less than 1.5% by weight of the frozen confection, more preferably less than 1 wt%, less than 0.5 wt%, or even less than 0.2 wt %. Preferably the frozen confection is substantially free of arabitol, glycerol, xylitol, sorbitol, mannitol, lactitol, and maltitol.

The protein comprises pulse protein and milk protein. The pulse protein is preferably selected from: bean protein, lentil protein, lupin protein, pea protein, soy protein, and mixtures thereof. For example, the pulse protein may comprise pea protein, soy protein, or a mixture thereof. It is particularly preferred that the pulse protein is pea protein. The milk protein is preferably selected from: casein, whey proteins, and mixtures thereof. The source of the milk protein is not critical. For example, the milk protein may be provided as milk (concentrated, skimmed or whole), skimmed milk powder, whey powders, whey protein concentrate, whey protein isolate, buttermilk, buttermilk powder, of a mixture thereof. It is particularly preferred that the milk protein is provided in the form of skimmed milk powder (which typically comprises around 34 wt% milk protein - a combination of casein and whey proteins).

The relative amounts of pulse protein and milk protein are controlled in order to achieve the desired temperature stability. Therefore, the weight ratio of pulse protein to milk protein is from 1:2 to 1:6. The weight ratio of pulse protein to milk protein is preferably 1:2 to 2:11, 1:2 to 1:5, 2:5 to 1:6, 2:5 to 2:11, 2:5 to 1:5, 1:3 to 1:6, 1:3 to 2:11, or even 1:3 to 1:5.

The amount of milk protein in the frozen confection will depend to a certain extent on the type of frozen confection and local regulations. It is preferred that the amount of milk protein is at least 2 wt%, at least 2.4 wt%, at least 2.8 wt%, or even at least 3.2 wt%. It is preferred than the amount of milk protein is no more than 8 wt%, no more than 7 wt%, no more than 6 wt%, or even no more than 5 wt%.

The amount of pulse protein in the frozen confection is less important than the ratio of pulse protein to milk protein. However, since high levels of pulse protein are associated with undesirable mouthfeel characteristics (such as grittiness), it is preferred that the frozen confection comprises the pulse protein in an amount of 0.2 wt% to 1 wt%, 0.3 wt% to 0.8 wt%, or 0.3 wt% to 0.7 wt%.

It is possible for the frozen confection to comprise further sources of protein (i.e. in addition to the pulse protein and milk protein). For example, the frozen confection may additionally comprise cereal protein (such as oat protein, wheat protein, rye protein, barley protein, rice protein, buckwheat protein, millet protein and mixtures thereof). When a further source of protein is included, this will contribute to the protein content of the frozen confection (which is 0.5 wt% to 10 wt% as previously discussed).

The frozen confection preferably comprises fat in an amount of 1 wt% to 15 wt%, from 4 wt% to 12 wt%, or even from 5 wt% to 10 wt%. The fat is preferably milk fat or vegetable fat (such as coconut oil, palm oil, palm kernel oil, or a mixture thereof). For example, the fat may comprise milk fat, coconut oil, or a mixture thereof. It is particularly preferred that the fat is coconut oil.

The frozen confection preferably comprises an emulsifier or a mixture of emulsifiers. For example, the frozen confection may comprise emulsifier(s) in an amount of 0.05 wt% to 1 wt%, 0.1 wt% to 0.8 wt%, or 0.15 wt% to 0.6 wt%.

The present inventors have found that frozen confections that are formulated with specific amounts and types of freezing point depressants as described herein are sensitive to temperature fluctuations - such as those which may be experienced in the frozen supply chain. Without wishing to be bound by theory, the inventors believe that the very factors that allow for easy extrusion at low temperatures confer poor microstructural stability at elevated temperatures - even if the confection remains frozen. The present inventors have found that employing certain emulsifier systems provide frozen confections with improved temperature stability.

The frozen confection preferably comprises distilled monoglycerides, either alone or in combination with other emulsifiers. Distilled monoglycerides are commercially available, for example from DuPont Nutrition & Biosciences under the Dimodan® brand. Preferably, the frozen confection comprises distilled monoglycerides in an amount of at least 0.04 wt%, at least 0.05 wt%, or even at least 0.06 wt%. With regard to improving the temperature stability, higher amounts of distilled monoglycerides are more effective. However, this has to be balanced against the fact that very high levels can lead to off-flavours and/or may harden the frozen confection product (and thus adversely impact its extrudability). Therefore, the frozen confection preferably comprises distilled monoglycerides in an amount of no more than 1 wt%, no more than 0.6 wt% or no more than 0.4 wt%.

The frozen confection preferably comprises an emulsifier selected from: acetic acid esters of mono- and/or diglycerides of fatty acids, lactic acid esters of mono- and/or diglycerides of fatty acids, and mixtures thereof. This can be instead of or in addition to distilled monoglycerides. Acetic acid esters of mono- and/or diglycerides of fatty acids (E472a) are often known by the generic name of ACETEM, and lactic acid esters of mono- and/or diglycerides of fatty acids (E472b) are often known by the generic name of LACTEM. Both are available commercially, for example from DuPont Nutrition & Biosciences under the Grinsted® brand. Lactic acid esters of mono- and/or diglycerides of fatty acids are particularly preferred.

The combined amount of acetic acid esters of mono- and/or diglycerides of fatty acids and lactic acid esters of mono- and/or diglycerides of fatty acids in the frozen confection is preferably 0.05 wt% to 1 wt%, 0.08 wt% to 0.75 wt%, or 0.1 wt% to 0.5 wt%. As mentioned above, lactic acid esters of mono- and/or diglycerides of fatty acids are particularly preferred - thus these ranges preferably refer to the amount of lactic acid esters of mono- and/or diglycerides of fatty acids.

Although not essential, the frozen confection typically comprises at least one stabiliser, which is preferably selected from the group consisting of locust bean gum, xanthan gum, guar gum, carrageenan, and mixtures thereof (for example, a mixture of locust bean gum and carageenan). The amount of stabiliser in the frozen confection is preferably 0.05 wt% to 2 wt%, 0.1 wt% to 1 wt%, or 0.2 wt% to 0.5 wt%.

The frozen confection may optionally comprise non-nutritive sweetener, such as aspartame, acesulfame K, erythritol, or one or more steviol glycosides such as rebaudioside A.

The frozen confection is preferably aerated. As used herein the term "aerated" means that the confection has an overrun of at least 30%. Preferably the frozen confection has an overrun of 50% to 150%, 70% to 140%, or even 80% to 120%. Overrun (with unit "%") is defined by the following equation:

$$overrun = \frac{\text{volume of aerated product - volume of initial mix}}{\text{Volume of initial mix}} \times 100\%$$

Overrun is measured at ambient temperature (20°C) and atmospheric pressure.

The frozen confection is preferably packaged in container comprising a product outlet and a moveable wall. A dispensing force can be transmitted through the moveable wall thereby causing the frozen confection to be extruded via the product outlet.

Thus, the invention also relates to a packaged frozen product wherein the frozen confection is packaged in a container comprising a product outlet and a moveable wall.

An example of a container comprising a moveable wall is a bag-in-bottle container (where the bag acts as the moveable wall). Such a bag-in-bottle container is described in WO 2007/039158. Another example is a cartridge comprising a plunger (where the plunger acts as the moveable wall). Such a cartridge is disclosed in US 2004/0161503.

The container may be adapted such that the wall is moveable on application of hand pressure. For example, where the frozen confection is packaged in a flexible pouch and squeezing the pouch by hand transmits the dispensing force thereby extruding the frozen confection. Such a flexible pouch is disclosed in WO 2018/224328, which is hereby incorporated by reference in its entirety.

The product outlet can take any form - for example the outlet can be a simple orifice or a spout.

The force needed to dispense the frozen confection from the container is attainable with hand pressure when the container is not too large. As such, the container preferably has a volume of 100 ml to 500 ml. Preferably the container has a volume of up to 475 ml, up to 450 ml, or even up to 400 ml. Preferably the container has a volume of at least 150 ml, at least 200 ml, at least 250 ml, or even at least 300 ml.

The container preferably contains at least one serving of the frozen confection. As such, the frozen confection packaged in the container preferably has a mass of at least 50 g, at least 100 g, at least 150 g, or even at least 175 g. The frozen confection packaged in the container preferably has a mass of no more than 325 g, no more than 300 g, no more than 275 g, or even no more than 250 g.

The frozen confections of the present invention can be manufactured by any suitable method. The frozen confection is typically made by freezing a premix (preferably a pasteurised premix) of ingredients such as water, fat, freezing point depressant, protein (comprising the pulse protein and milk protein), and optionally other ingredients such as emulsifiers, stabilisers, colours and flavours.

Definitions and descriptions of various terms and techniques used in frozen confection manufacture are found in Ice Cream by H. Douglas Goff and Richard W. Hartel (2013, 7th Edition, Kluwer Academic/Plenum Publishers). All percentages and ratios contained herein are calculated by weight (unless otherwise indicated), with the exception of percentages cited in relation to overrun.

As used herein "substantially free of" means that the frozen confection comprises the ingredient in question in an amount of less than 0.1 wt%, preferably less than 0.05 wt%, more preferably less than 0.01 wt%, for example from 0 wt% to 0.01 wt%.

Unless otherwise specified, numerical ranges expressed in the format "from x to y" are understood to include x and y, and in specifying any range of values or amounts, any particular upper value or amount can be associated with any particular lower value or amount.

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

**Examples**

The following examples are intended to illustrate the invention and are not intended to limit the invention to those examples *per se.*

Example 1

Ice creams were made according to the formulations in Table 1. The milk protein is provided by the skimmed milk powder (SMP), and the pulse protein is pea protein (Nutralys S85F). The freezing point depressants in these formulations are lactose (from the SMP: 50 wt% lactose), corn syrup (DE63), dextrose monohydrate, and erythritol. The emulsifier was LACTEM (supplied by DuPont Nutrition and Biosciences under the Grinsted® brand).

Briefly, the ingredients (excluding coconut oil) were combined and mixed with heating (60°C to 75°C), followed by addition of the coconut oil and further mixing. The mixes were pasteurised and homogenised. The mixes were aged overnight at 4°C and aerated in a scraped surface heat exchanger (standard ice cream freezer). The air input was controlled to give a target overrun of 100%, and freezing was controlled to give a target extrusion temperature of -10°C.

The frozen mixes were filled directly into pouches with flexible walls having a volume of 400 ml. The pouch wall was made of a laminate film comprising polyethylene terephthalate, orientated polyamide and polyethylene layers, and the shape of the pouch is as illustrated in Figure 3 of WO 2018/224328 A1. The product outlet was a spout with an internal diameter of 22 mm. Approximately 230 g of ice cream was filled into each pouch through the spout and then a closure cap screwed in place. The frozen product was hardened by placing the pouches in a blast freezer.

Table 1: ice cream formulations

| Ingredient (wt%) | Sample | |
|---|---|---|
| | **A** | **1** |
| Coconut oil | 8.0 | 6.9 |
| SMP | 6.8 | 5.64 |
| Pea protein (83% protein) | - | 0.5 |
| Dextrose monohydrate | 13.0 | 13.65 |
| Corn syrup (DE63, 78% solids) | 15.5 | 15.5 |
| Erythritol | 3.0 | 3.0 |
| Emulsifier | 0.4 | 0.4 |
| Stabiliser | 0.27 | 0.27 |
| Vanilla flavour | 0.28 | 0.28 |
| Colour | 0.01 | 0.01 |
| Water | to 100 | to 100 |
| Freezing point depressants | 30.3 | 30.3 |
| $<M>_n$ (g mol$^{-1}$) | 213 | 211 |
| Total protein | 2.31 | 2.34 |
| Pulse protein (***P***) | - | 0.42 |
| Milk protein (***M***) | 2.31 | 1.92 |
| (***P***):(***M***) | N/A | 1 : 4.6 |

Example 2

Pouches containing samples prepared in Example 1 were transferred to a domestic freezer (-18°C) for several days before testing. The ease of extruding the product from the pouches was assessed. Pouches were taken out of the freezer (-18°C). The closure cap was removed, and the product was squeezed out by hand into cones. Each pouch typically provided 4 servings of ice cream (i.e. it was possible to extrude sufficient product from each pouch to fill 4 cones). The product was organoleptically assessed. One cone was left at room temperature for 10 minutes to observe the effect on ice cream structure after a period of melting. Sample A and Sample 1 were both readily extrudable from the pouch by hand. Furthermore, both samples produced attractive flutes and had an acceptable taste.

Example 3

Pouches containing samples prepared in Example 1 were subjected to temperature abuse in order to simulate the thermal regimes which may be encountered in a cold chain. This involved storing pouches in a temperature-controlled cabinet for 7 days. The temperature of the cabinet was cycled as follows: -20°C for 11.5 hours, +10° for 0.5 hours, -10°C for 11.5 hours, +10° for 0.5 hours.

Following the 7 day temperature abuse regime, the pouches were transferred to a domestic freezer (-18°C) for several days before testing. The ease of extruding the product from the pouches was assessed as described in Example 2.

Sample A was initially very difficult to extrude due to a plug of ice cream which blocked to spout. Once the plug had cleared, it was readily extruded from the pouch. The final portion extruded from the pouch was quite wet. The ice cream was not homogenous and was icy with relatively large ice particles present in the product. The pouch was found to be especially cold to the touch when the ice cream was being extruded and the ice cream itself was also perceived as being notably colder when being eaten. The flavour was less intense than the non-temperature abused product, and the texture of the ice cream product was not acceptable.

In contrast, Sample 1 was easy to extrude from the pouch by hand after removal from the freezer, and felt softer in the pouch than Sample A. In this instance, the spout of the pouch was not filled with ice cream (unlike the pouch containing Sample A). The final portion extruded from the pouch was only slightly wet. The ice cream had a slightly ragged flame shape after extrusion and was icier than the non-temperature abused product, but less icy than Sample A. The taste of Sample 1 was acceptable and similar to that of the non-temperature abused product.

The data indicates that ice creams comprising a small amount of pulse protein in addition to milk protein are more resilient to temperature variations inherent in a frozen supply chain than ice creams which only comprise milk protein.

Example 4

Ice creams were made according to the formulations in Table 2. Sample 2 is vanilla ice cream and Sample 3 is chocolate ice cream. Once again, the milk protein is provided by SMP (34 wt% milk protein), and the pulse protein is pea protein (Nutralys S85F). The freezing point depressants are lactose (from the SMP: 50 wt% lactose), corn syrup (DE63), dextrose monohydrate, and erythritol. The chocolate flavour (a combination of cocoa powder and chocolate chips) used in Sample 3 also contributes to the total protein content, as well as to the amount of freezing point depressants in this formulation. The emulsifier in each case includes distilled monoglycerides (supplied by DuPont Nutrition and Biosciences under the Dimodan® brand) in an amount of 0.05 wt% of the ice cream formulation.

Table 2: ice cream formulations

| Ingredient (wt%) | Sample | |
|---|---|---|
| | 2 | 3 |
| Coconut oil | 8.0 | 7.0 |
| SMP | 5.64 | 3.35 |
| Pea protein (83% protein) | 0.5 | 0.5 |
| Dextrose monohydrate | 13.0 | 13.0 |
| Corn syrup (DE63, 78% solids) | 15.5 | 14.5 |
| Erythritol | 3.0 | 3.0 |
| Soluble corn fibre | 2.0 | 2.0 |
| Emulsifier | 0.15 | 0.15 |
| Stabiliser | 0.27 | 0.2 |
| Chocolate flavour | - | 5.0 |
| Other flavours | 0.225 | 0.17 |
| Colour | 0.01 | 0.01 |

(continued)

| Ingredient (wt%) | Sample | |
|---|---|---|
| | 2 | 3 |
| Water | to 100 | to 100 |
| Freezing point depressants | 29.7 | 29.3 |
| $<M>_n$ (g mol$^{-1}$) | 211 | 211 |
| Total protein | 2.34 | 2.28 |
| Pulse protein ($P$) | 0.42 | 0.42 |
| Milk protein ($M$) | 1.92 | 1.29 |
| ($P$):($M$) | 1 : 4.6 | 1 : 3.1 |

The ice creams were prepared according to the process described in Example 1, and assessed as described in Examples 2 and 3.

Sample 2 and Sample 3 were both readily extrudable from the pouch by hand even after temperature abuse. Furthermore, both samples produced attractive flutes and had an acceptable taste.

**Claims**

1. A frozen confection comprising:

   • freezing point depressants in an amount of 20 wt% to 40 wt%, wherein the number average molecular weight $<M>_n$ of the freezing point depressants is 200 g mol$^{-1}$ to 275 g mol$^{-1}$; and
   • protein in an amount of 0.5 wt% to 10 wt%, wherein the protein comprises pulse protein and milk protein and the weight ratio of pulse protein to milk protein is from 1:2 to 1:6.

2. The frozen confection as claimed in claim 1 wherein the frozen confection comprises freezing point depressants in an amount of 25 wt% to 36 wt%.

3. The frozen confection as claimed in claim 1 or claim 2 wherein the number average molecular weight $<M>_n$ of the freezing point depressants is 204 g mol$^{-1}$ to 245 g mol$^{-1}$.

4. The frozen confection as claimed in any one of claims 1 to 3 wherein the weight ratio of pulse protein to milk protein is from 2:5 to 1:5.

5. The frozen confection as claimed in any one of claims 1 to 4 wherein the frozen confection comprises the milk protein in an amount of 2 wt% to 8 wt%.

6. The frozen confection as claimed in any one of claims 1 to 5 wherein the frozen confection comprises the pulse protein in an amount of 0.2 wt% to 1 wt%.

7. The frozen confection as claimed in any one of claims 1 to 6 comprising fat in an amount of 1 wt% to 15 wt%.

8. The frozen confection as claimed in any one of claims 1 to 7 comprising emulsifier(s) in an amount of 0.05 wt% to 1 wt%.

9. The frozen confection as claimed in claim 8 wherein the frozen confection comprises distilled monoglycerides, preferably in an amount of 0.04 wt% to 1 wt%.

10. The frozen confection as claimed in claim 8 or claim 9 wherein the frozen confection comprises an emulsifier selected from: acetic acid esters of mono- and/or diglycerides of fatty acids, lactic acid esters of mono- and/or diglycerides of fatty acids, and mixtures thereof, preferably in an amount of 0.05 wt% to 1 wt%.

11. The frozen confection as claimed in any one of claims 1 to 10 wherein the pulse protein is selected from: bean protein, lentil protein, lupin protein, pea protein, soy protein, and mixtures thereof.

12. The frozen confection as claimed in any one of claims 1 to 11 wherein the frozen confection additionally comprises cereal protein.

13. A packaged frozen product wherein the frozen confection as claimed in any one of claims 1 to 12 is packaged in a container comprising a product outlet and a moveable wall.

14. The packaged frozen product as claimed in claim 13 wherein the container has a volume of 100 ml to 500 ml.

15. The packaged frozen product as claimed in claim 13 or claim 14 wherein the frozen confection packed in the container has a mass of 50 g to 325 g.

**Patentansprüche**

1. Gefrorenes Konfekt, umfassend:

   • Gefrierpunktserniedriger in einer Menge von 20 Gew.-% bis 40 Gew.-%, wobei das zahlenmittlere Molekulargewicht $<M>_n$ der Gefrierpunktserniedriger 200 g mol$^{-1}$ bis 275 g mol$^{-1}$ beträgt; und
   • Protein in einer Menge von 0,5 Gew.-% bis 10 Gew.-%, wobei das Protein Hülsenfruchtprotein und Milchprotein umfasst und das Gewichtsverhältnis von Hülsenfruchtprotein zu Milchprotein 1:2 bis 1:6 beträgt.

2. Gefrorenes Konfekt, wie im Anspruch 1 beansprucht, wobei das gefrorene Konfekt Gefrierpunktserniedriger in einer Menge von 25 Gew.-% bis 36 Gew.-% umfasst.

3. Gefrorenes Konfekt, wie im Anspruch 1 oder Anspruch 2 beansprucht, wobei das zahlenmittlere Molekulargewicht $<M>_n$ der Gefrierpunktserniedriger 204 g mol$^{-1}$ bis 245 g mol$^{-1}$ beträgt.

4. Gefrorenes Konfekt, wie in irgendeinem der Ansprüche 1 bis 3 beansprucht, wobei das Gewichtsverhältnis von Hülsenfruchtprotein zu Milchprotein 2:5 bis 1:5 beträgt.

5. Gefrorenes Konfekt, wie in irgendeinem der Ansprüche 1 bis 4 beansprucht, wobei das gefrorene Konfekt das Milchprotein in einer Menge von 2 Gew.-% bis 8 Gew.-% umfasst.

6. Gefrorenes Konfekt, wie in irgendeinem der Ansprüche 1 bis 5 beansprucht, wobei das gefrorene Konfekt das Hülsenfruchtprotein in einer Menge von 0,2 Gew.-% bis 1 Gew.-% umfasst.

7. Gefrorenes Konfekt, wie in irgendeinem der Ansprüche 1 bis 6 beansprucht, das Fett in einer Menge von 1 Gew.-% bis 15 Gew.-% umfasst.

8. Gefrorenes Konfekt, wie in irgendeinem der Ansprüche 1 bis 7 beansprucht, umfassend Emulgator(en) in einer Menge von 0,05 Gew.-% bis 1 Gew.-%.

9. Gefrorenes Konfekt, wie im Anspruch 8 beansprucht, wobei das gefrorene Konfekt destillierte Monoglyceride, vorzugsweise in einer Menge von 0,04 Gew.-% bis 1 Gew.-%, umfasst.

10. Gefrorenes Konfekt, wie im Anspruch 8 oder Anspruch 9 beansprucht, wobei das gefrorene Konfekt einen Emulgator umfasst, ausgewählt aus:

    Essigsäureestern von Mono- und/oder Diglyceriden von Fettsäuren,
    Milchsäureestern von Mono- und/oder Diglyceriden von Fettsäuren, und
    Mischungen davon, vorzugsweise in einer Menge von 0,05 Gew.-% bis 1 Gew.-%.

11. Gefrorenes Konfekt, wie in irgendeinem der Ansprüche 1 bis 10 beansprucht, wobei das Hülsenfruchtprotein aus Bohnenprotein, Linsenprotein, Lupinenprotein, Erbsenprotein, Sojaprotein und Mischungen davon ausgewählt ist.

**12.** Gefrorenes Konfekt, wie in irgendeinem der Ansprüche 1 bis 11 beansprucht, wobei das gefrorene Konfekt zusätzlich Getreideprotein umfasst.

**13.** Verpacktes gefrorenes Produkt, wobei das gefrorene Konfekt, wie in irgendeinem der Ansprüche 1 bis 12 beansprucht, in einem Behälter verpackt ist, der einen Produktauslass und eine bewegliche Wand umfasst.

**14.** Verpacktes gefrorenes Produkt, wie im Anspruch 13 beansprucht, wobei der Behälter ein Volumen von 100 ml bis 500 ml aufweist.

**15.** Verpacktes gefrorenes Produkt, wie im Anspruch 13 oder Anspruch 14 beansprucht, wobei das in dem Behälter verpackte gefrorene Konfekt eine Masse von 50 g bis 325 g aufweist.

**Revendications**

**1.** Confiserie congelée comprenant :

• des agents d'abaissement du point de congélation dans une quantité de 20 % en masse à 40 % en masse, dans laquelle la masse moléculaire moyenne en nombre $<M>_n$ des agents d'abaissement du point de congélation est de 200 g mol$^{-1}$ à 275 g mol$^{-1}$ ; et
• une protéine dans une quantité de 0,5 % en masse à 10 % en masse, dans laquelle la protéine comprend une protéine de légumineuse et une protéine de lait et le rapport en masse de protéine de légumineuse à protéine de lait est de 1:2 à 1:6.

**2.** Confiserie congelée selon la revendication 1, dans laquelle la confiserie congelée comprend des agents d'abaissement du point de congélation dans une quantité de 25 % en masse à 36 % en masse.

**3.** Confiserie congelée selon la revendication 1 ou revendication 2, dans laquelle la masse moléculaire moyenne en nombre $<M>_n$ des agents d'abaissement du point de congélation est de 204 g mol$^{-1}$ à 245 g mol$^{-1}$.

**4.** Confiserie congelée selon l'une quelconque des revendications 1 à 3, dans laquelle le rapport en masse de protéine de légumineuse à protéine de lait est de 2:5 à 1:5.

**5.** Confiserie congelée selon l'une quelconque des revendications 1 à 4, dans laquelle la confiserie congelée comprend la protéine de lait dans une quantité de 2 % en masse à 8 % en masse.

**6.** Confiserie congelée selon l'une quelconque des revendications 1 à 5, dans laquelle la confiserie congelée comprend la protéine de légumineuse dans une quantité de 0,2 % en masse à 1 % en masse.

**7.** Confiserie congelée selon l'une quelconque des revendications 1 à 6 comprenant de la graisse dans une quantité de 1 % en masse à 15 % en masse.

**8.** Confiserie congelée selon l'une quelconque des revendications 1 à 7 comprenant un(des) émulsifiant(s) dans une quantité de 0,05 % en masse à 1 % en masse.

**9.** Confiserie congelée selon la revendication 8, dans laquelle la confiserie congelée comprend des monoglycérides distillés, de préférence dans une quantité de 0,04 % en masse à 1 % en masse.

**10.** Confiserie congelée selon la revendication 8 ou revendication 9, dans laquelle la confiserie congelée comprend un émulsifiant choisi parmi : des esters d'acide acétique de mono- et/ou diglycérides d'acides gras, des esters d'acide lactique de mono- et/ou diglycérides d'acides gras, et des mélanges de ceux-ci, de préférence dans une quantité de 0,05 % en masse à 1 % en masse.

**11.** Confiserie congelée selon l'une quelconque des revendications 1 à 10, dans laquelle la protéine de légumineuse est choisie parmi : protéine de fève, protéine de lentille, protéine de lupin, protéine de pois, protéine de soja, et mélanges de celles-ci.

**12.** Confiserie congelée selon l'une quelconque des revendications 1 à 11, dans laquelle la confiserie congelée comprend de plus une protéine de céréale.

13. Produit congelé emballé, dans lequel la confiserie congelée selon l'une quelconque des revendications 1 à 12 est emballée dans un récipient comprenant une sortie de produit et une paroi mobile.

14. Produit congelé emballé selon la revendication 13, dans lequel le récipient présente un volume de 100 ml à 500 ml.

15. Produit congelé emballé selon la revendication 13 ou revendication 14, dans lequel la confiserie congelée emballée dans le récipient présente une masse de 50 g à 325 g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040161503 A
- WO 2017133863 A
- CN 102870951 B
- WO 2007039158 A
- WO 2018224328 A
- WO 2018224328 A1

**Non-patent literature cited in the description**

- *J. Food Eng.,* 1997, vol. 33, 221-226
- **H. DOUGLAS GOFF ; RICHARD W. HARTEL.** Ice Cream. Kluwer Academic/Plenum Publishers, 2013